# EUROPÄISCHE PATENTSCHRIFT

(11) **EP 3 257 219 B1**
(45) Veröffentlichungstag und Bekanntmachung des Hinweises auf die Patenterteilung: **05.02.2020**
(21) Anmeldenummer: 16705729.8
(22) Anmeldetag: 05.02.2016
(51) Int. Cl.: H04L 29/08, G06F 21/57, H04W 12/08, H04W 88/06, H04W 4/50, H04L 29/06, H04W 8/18

(54) **VERFAHREN ZUM BETREIBEN EINES SICHERHEITSELEMENTS**
METHOD FOR OPERATING A SECURITY ELEMENT
PROCÉDÉ POUR FAIRE FONCTIONNER UN ÉLÉMENT DE SÉCURITÉ

(30) Priorität: 09.02.2015 DE 102015001900
(43) Veröffentlichungstag der Anmeldung: 20.12.2017
(73) Patentinhaber: Giesecke+Devrient Mobile Security GmbH, 81677 München (DE)
(72) Erfinder: WIMBÖCK, Ulrich, 82327 Tutzing (DE)
(86) Internationale Anmeldenummer: PCT/EP2016/000226
(87) Internationale Veröffentlichungsnummer: WO 2016/128137

(56) Entgegenhaltungen:
- DE-A1-102012 015 573
- US-A1- 2013 165 073
- US-A1- 2014 308 991
- Kazunari Suzuki ET AL: "Standardization of Embedded UICC Remote Provisioning", NTT DOCOMO Technical Journal, 31. Dezember 2014 (2014-12-31), Seiten 1-6, XP055262198, Gefunden im Internet: URL:https://www.nttdocomo.co.jp/english/bi nary/pdf/corporate/technology/rd/technical _journal/bn/vol16_2/vol16_2_005en.pdf [gefunden am 2016-04-01]

## Beschreibung

### Gebiet der Erfindung

Die Erfindung betrifft ein Verfahren zum Betreiben eines Sicherheitselements sowie ein solches Sicherheitselement. Insbesondere betrifft die Erfindung ein Verfahren zum Betreiben eines Sicherheitselements, z.B. ein SIM oder eine eUICC eines mobilen Endgeräts zum Einbuchen in ein Mobilfunknetzwerk.

### Hintergrund der Erfindung

Das Kommunizieren mittels eines mobilen Endgeräts, beispielsweise einem Mobiltelefon, über ein Mobilfunknetzwerk (auch als PLMN [Public Land Mobile Network] bezeichnet), das von einem Netzbetreiber (auch als MNO [Mobile Network Operator] bezeichnet) betrieben wird, erfordert in der Regel, dass das mobile Endgerät mit einem Sicherheitselement zum sicheren Speichern von Subskriptionsberechtigungsdaten ("Subscription Credentials") ausgestattet ist, die den Benutzer des mobilen Endgeräts gegenüber dem Mobilfunknetzwerk eindeutig identifizieren und authentisieren. Derartige Subskriptionsberechtigungsdaten, beispielsweise eine IMSI (International Mobile Subscriber Identity) und ein Authentisierungsschlüssel Ki, sind in der Regel Teil eines sogenannten Subskriptionsprofils, dass neben den Subskriptionsberechtigungsdaten beispielsweise auch Programmcode umfassen kann, durch den betreiberspezifische Kryptoalgorithmen implementiert sind und der auf Funktionen zugreift, die von einem Betriebssystem des Sicherheitselements bereitgestellt werden.

Während in der Vergangenheit die große Mehrzahl von Sicherheitselementen in Form von SIM-Karten in einem mobilen Endgerät einfach ausgetauscht werden konnten, gibt es seit einiger Zeit mehr und mehr Sicherheitselemente, die fest in einem mobilen Endgerät verbaut werden. Ein solches fest in ein mobiles Endgerät verbautes Sicherheitselement ist dem Fachmann insbesondere unter dem Begriff "Embedded SIM" oder "Embedded UICC (eUICC)" bekannt.

Obwohl es im Prinzip bekannt ist, mehrere Subskriptionsprofile auf einem Sicherheitselement bereitzustellen, besteht hier das Problem, dass die Subskriptionsprofile unterschiedlicher Mobilfunknetzbetreiber häufig nur mit unterschiedlichen Betriebssystemvarianten des Sicherheitselements funktionieren.

Die US 2013/165073 A1 beschreibt ein Verfahren, bei welchem durch zwei oder mehr Subskriptionen (z. B. Profile), die auf zwei oder mehr vUICCs implementiert sind, mehrere aktive Netzwerksubskriptionen emuliert werden und zu mindestens einer Dual-SIM-Umgebung führen.

Vor diesem Hintergrund stellt sich der vorliegenden Erfindung die Aufgabe, ein verbessertes Verfahren zum Betreiben eines Sicherheitselements sowie ein entsprechend ausgestaltetes Sicherheitselement bereitzustellen, mit denen die vorstehend beschriebenen Probleme zumindest teilweise gelöst werden können.

Die Erfindung ist durch die beigefügten Ansprüche bestimmt.

### Zusammenfassung der Erfindung

Die vorstehende Aufgabe wird gemäß der vorliegenden Erfindung durch den jeweiligen Gegenstand der unabhängigen Ansprüche gelöst. Bevorzugte Ausgestaltungen der Erfindung werden in den abhängigen Ansprüchen definiert.

Gemäß einem ersten Aspekt der Erfindung wird ein Verfahren zum Betreiben eines Sicherheitselements eines mobilen Endgeräts mit einer Speichereinheit bereitgestellt, in der ein erstes Subskriptionsprofil mit einem ersten Betriebssystem für das Sicherheitselement sowie ein zweites Subskriptionsprofil mit einem zweiten Betriebssystem für das Sicherheitselement vorliegt. Dabei umfasst das Verfahren die folgenden Schritte: das Betreiben des Sicherheitselements mit dem ersten Betriebssystem, um mit dem ersten Subskriptionsprofil über ein erstes Mobilfunknetzwerk kommunizieren zu können; das Umschalten vom ersten Betriebssystem zum zweiten Betriebssystem des Sicherheitselements, indem nach einem Neustart des Sicherheitselements von einem Bootloader in der Speichereinheit das zweite Betriebssystem geladen und ausgeführt wird; und das Betreiben des Sicherheitselements mit dem zweiten Betriebssystem, um mit dem zweiten Subskriptionsprofil über ein zweites Mobilfunknetzwerk kommunizieren zu können.

Vorzugsweise umfasst der Schritt des Umschaltens vom ersten Betriebssystem zum zweiten Betriebssystem des Sicherheitselements die folgenden Schritte: das Empfangen einer Nachricht von einem Hintergrundsystem durch das mit dem ersten Betriebssystem betriebene Sicherheitselement mit dem Informationsgehalt, dass vom ersten Betriebssystem zum zweiten Betriebssystem des Sicherheitselements umgeschaltet werden soll; das Weiterleiten der Nachricht an den Bootloader; und das Extrahieren des Informationsgehalts der Nachricht aus der Nachricht durch den Bootloader, so dass die Einstellungen des Bootloaders derart geändert werden, dass nach einem Neustart des Sicherheitselements das zweite Betriebssystem des Sicherheitselements geladen und ausgeführt wird.

Alternativ umfasst der Schritt des Umschaltens vom ersten Betriebssystem zum zweiten Betriebssystem des Sicherheitselements die folgenden Schritte: das Empfangen einer Eingabe von einem Nutzer durch das mit dem ersten Betriebssystem betriebene Sicherheitselement mit dem Informationsgehalt, dass vom ersten Betriebssystem zum zweiten Betriebssystem des Sicherheitselements umgeschaltet werden soll; das Weiterleiten der Eingabe an den Bootloader; und das Extrahieren des Informationsgehalts der Eingabe aus der Eingabe durch den Bootloader, so dass die Einstellungen des Bootloaders derart geändert werden, dass nach einem Neustart des Sicherheitselements das zweite Betriebssystem des Sicherheitselements geladen und ausgeführt wird.

Alternativ umfasst der Schritt des Umschaltens vom ersten Betriebssystem zum zweiten Betriebssystem des Sicherheitselements die folgenden Schritte: das Empfangen einer Nachricht von einem Hintergrundsystem durch das mit dem ersten Betriebssystem betriebene Sicherheitselement mit dem Informationsgehalt, dass vom ersten Betriebssystem zum zweiten Betriebssystem des Sicherheitselements umgeschaltet werden soll; das Extrahieren des Informationsgehalts der Nachricht aus der Nachricht durch das mit dem ersten Betriebssystem betriebene Sicherheitselement; und das Weiterleiten des Informationsgehalts der Nachricht an den Bootloader, so dass die Einstellungen des Bootloaders derart geändert werden, dass nach einem Neustart des Sicherheitselements das zweite Betriebssystem des Sicherheitselements geladen und ausgeführt wird.

Gemäß bevorzugter Ausführungsformen der Erfindung erfolgt die Kommunikation zwischen dem mit dem ersten Betriebssystem betriebenen Sicherheitselement und dem Bootloader über eine geeignet ausgestaltete Programmbibliothek oder Programmierschnittstelle bzw. API ("application programming interface").

Die Einstellungen des Bootloaders werden geändert, indem im Bootloader ein Marker gesetzt wird, der definiert, dass nach einem Neustart des Sicherheitselements das zweite Betriebssystem des Sicherheitselements geladen und ausgeführt wird.

Gemäß einem zweiten Aspekt der Erfindung wird ein Sicherheitselement für ein mobiles Endgerät mit einer Speichereinheit bereitgestellt, in der ein erstes Subskriptionsprofil mit einem ersten Betriebssystem für das Sicherheitselement sowie ein zweites Subskriptionsprofil mit einem zweiten Betriebssystem für das Sicherheitselement vorliegt. Dabei ist das Sicherheitselement dazu ausgestaltet: mit dem ersten Betriebssystem betrieben zu werden, um mit dem ersten Subskriptionsprofil über ein erstes Mobilfunknetzwerk kommunizieren zu können; vom ersten Betriebssystem zum zweiten Betriebssystem des Sicherheitselements umzuschalten, indem nach einem Neustart des Sicherheitselements von einem Bootloader in der Speichereinheit das zweite Betriebssystem geladen und ausgeführt wird; und mit dem zweiten Betriebssystem betrieben zu werden, um mit dem zweiten Subskriptionsprofil über ein zweites Mobilfunknetzwerk kommunizieren zu können.

Vorzugsweise ist das Sicherheitselement dazu ausgestaltet, vom ersten Betriebssystem zum zweiten Betriebssystem des Sicherheitselements umzuschalten, indem das Sicherheitselement dazu ausgestaltet ist: eine Nachricht von einem Hintergrundsystem durch das erste Betriebssystem mit dem Informationsgehalt zu empfangen, dass vom ersten Betriebssystem zum zweiten Betriebssystem des Sicherheitselements umgeschaltet werden soll; die Nachricht an den Bootloader weiterzuleiten; und den Informationsgehalt der Nachricht aus der Nachricht durch den Bootloader zu extrahieren, so dass die Einstellungen des Bootloaders derart geändert werden, dass nach einem Neustart des Sicherheitselements das zweite Betriebssystem des Sicherheitselements geladen und ausgeführt wird.

Alternativ ist das Sicherheitselement dazu ausgestaltet, vom ersten Betriebssystem zum zweiten Betriebssystem des Sicherheitselements umzuschalten, indem das Sicherheitselement dazu ausgestaltet ist: eine Nachricht von einem Hintergrundsystem durch das erste Betriebssystem mit dem Informationsgehalt zu empfangen, dass vom ersten Betriebssystem zum zweiten Betriebssystem des Sicherheitselements umgeschaltet werden soll; den Informationsgehalt der Nachricht aus der Nachricht durch das erste Betriebssystem zu extrahieren; und den Informationsgehalt der Nachricht an den Bootloader weiterzuleiten, so dass die Einstellungen des Bootloaders derart geändert werden, dass nach einem Neustart des Sicherheitselements das zweite Betriebssystem des Sicherheitselements geladen und ausgeführt wird.

Vorzugsweise ist das Sicherheitselement derart ausgestaltet, dass die Kommunikation zwischen dem ersten Betriebssystem und dem Bootloader über eine geeignet ausgestaltete Programmbibliothek oder Programmierschnittstelle bzw. API ("application programming interface") erfolgt.

Das Sicherheitselement ist dazu ausgestaltet, die Einstellungen des Bootloaders zu ändern, indem im Bootloader ein Marker gesetzt wird, der definiert, dass nach einem Neustart des Sicherheitselements das zweite Betriebssystem des Sicherheitselements geladen und ausgeführt wird.

Bei einem Sicherheitselement handelt es sich beispielsweise um einen in Hardware ausgestalteten Datenträger. Das Sicherheitselement ist beispielsweise als ein fest integrierter Bestandteil in einem Endgerät angeordnet, wobei es entweder in der Form nicht vom Endgerät entnommen werden kann, beispielsweise als Teilnehmeridentifikationsmodul, M2M-Modul, Co-Prozessor, Trusted Base, Trusted Platform Module.

Alternativ ist das Sicherheitselement als ein entnehmbares Modul mit dem mobilen Endgerät verbunden, beispielsweise als Chipkarte, insbesondere als Teilnehmeridentifikationsmodul, Smart Card, Massenspeicherkarte, USB-Token, Multimediakarte, Secure MicroSD-Karte, Mobilfunknetztoken, z.B. ein UMTS-Surfstick und/oder als elektronisches Identitätsdokument, beispielsweise als elektronischer Personalausweis beziehungsweise Reisepass mit, in einem Speicherbereich abgelegten maschinenlesbaren Identifikationsdaten einer Person.

Gemäß einer weiteren Alternative kann das Sicherheitselement als eine Kombination aus Hard- und Softwarekomponenten in einem vertrauenswürdigen Teil eines Betriebssystems des Endgeräts ausgebildet sein, die dem Fachmann auch als gesicherte Laufzeitumgebung ("Trusted Execution Environment"; TEE) bekannt ist. Das Sicherheitselement kann dann beispielsweise innerhalb einer solchen gesicherten Laufzeitumgebung in Form von darin ablaufenden Programmen, sogenannten Trustlets ausgebildet sein.

Bei dem Sicherheitselement handelt es sich grundsätzlich um einen in Baugröße und Ressourcenumfang reduzierten Computer, der einen Prozessor und mindestens eine Schnittstelle zur Kommunikation mit einem ex-ternen Gerät aufweist. Häufig besitzt er keine oder nur eine rudimentäre eigene Nutzerdatenausgabe. Das Sicherheitselement weist insbesondere einen Datenspeicher zum Ablegen von Daten, Informationen, Dateien und/oder Applikationen mit dazugehörigen Variablen ab, wobei Bereiche des Datenspeichers flüchtig oder nicht-flüchtig sein können. Der nichtflüchtige Datenspeicher kann insbesondere permanent, beispielsweise als ein Read-Only-Memory, kurz ROM oder semi-permanent sein, beispielsweise als ein Electrically-Erasable-Programmable-Read-Only-Memory, kurz EEPROM, Flashspeicher, Ferroelectric Random Access Memory, kurz FRAM bzw. FeRAM-Speicher oder Magnetoresistive Random Access Memory, kurz MRAM-Speicher.

Gemäß einem dritten Aspekt der Erfindung wird ein mobiles Endgerät mit einem Sicherheitselement gemäß dem zweiten Aspekt der Erfindung bereitgestellt.

Wie der Fachmann erkennt, lassen sich die vorstehend beschriebenen bevorzugten Ausgestaltungen im Rahmen der unterschiedlichen Aspekte der vorliegenden Erfindung vorteilhaft implementieren.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnung verwiesen, in der zeigt:

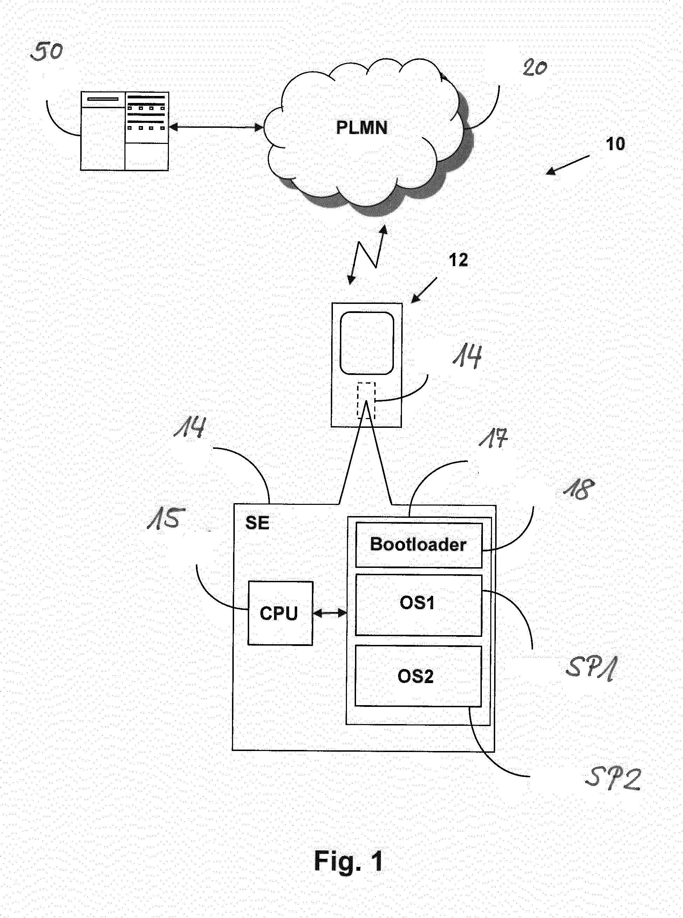

- Fig. 1: eine schematische Darstellung eines Kommunikationssystems mit einem mobilen Endgerät mit einem Sicherheitselement, die unterschiedliche Aspekte der vorliegenden Erfindung illustriert.

Figur 1 zeigt eine schematische Darstellung der Komponenten eines Kommunikationssystems 10 sowie einige der Kommunikationsverbindungen zwischen diesen Komponenten, das unterschiedliche Aspekte der vorliegenden Erfindung illustriert. Obgleich in der nachstehenden detaillierten Beschreibung auf ein "mobiles" Endgerät Bezug genommen wird, wird der Fachmann erkennen, dass die vorliegende Erfindung vorteilhaft im Zusammenhang mit jeder Art von Endgerät implementiert werden kann, das dazu ausgestaltet ist, über ein mobiles oder zelluläres Kommunikationsnetzwerk zu kommunizieren, also auch mit Endgeräten, deren Standort sich praktisch nicht ändert. Mit anderen Worten: das hierein verwendete Attribut "mobil" bezieht sich auf die Fähigkeit des Endgeräts über ein mobiles oder zelluläres Kommunikationsnetzwerk zu kommunizieren, einschließlich IP-basierte Kommunikationsnetzwerke.

Ein beispielhaftes mobiles Endgerät 12 ist in Figur 1 dargestellt, das vorzugsweise ein Sicherheitselement ("Secure Element") 14 zum sicheren Speichern und Verarbeiten von Daten umfasst, die beispielsweise das mobile Endgerät 12 und/oder dessen Benutzer eindeutig identifizieren. Wie dies in Figur 1 angedeutet ist, handelt es sich bei dem mobilen Endgerät 12 vorzugsweise um ein Mobiltelefon, ein Smartphone oder eine ähnliche Vorrichtung. Der Fachmann wird jedoch erkennen, dass das mobile Endgerät 12 gemäß der vorliegenden Erfindung ebenfalls in Form von anderen Vorrichtungen implementiert werden kann, die dazu eingerichtet sind, über ein Mobilfunknetzwerk zu kommunizieren, wie beispielsweise ein Tablett-Computer, ein Notebook, ein TV-System, eine Set-Top-Box, ein Verkaufsautomat, ein Kraftfahrzeug, eine Überwachungskamera, eine Sensorvorrichtung und dergleichen.

Gemäß bevorzugter Ausführungsformen der Erfindung ist das Sicherheitselement 14 als eine eUICC (embedded Universal Integrated Circuit Card) mit einer darauf implementierten SIM-Applikation ausgestaltet, d.h. als ein Sicherheitselement, das fester Bestandteil des mobilen Endgeräts 12 ist und in einem Mobilfunknetzwerk für die eindeutige und sichere Identifizierung des Benutzers bzw. Teilnehmers und für die Bereitstellung unterschiedlicher Funktionen und Mehrwertdienste verwendet wird. Alternativ kann das Sicherheitselement 14 als eine UICC (Universal Integrated Circuit Card) oder SIM-Karte (Subscriber Identity Module) ausgestaltet sein, die dem Fachmann als eine der zurzeit am häufigsten verwendeten Formen eines Sicherheitselements bekannt ist. Der Fachmann wird jedoch erkennen, dass andere Arten von Sicherheitselementen, die je nach Generation und Typ des zugrunde liegenden Mobilfunkstandards als USIM, R-UIM, ISIM und dergleichen bezeichnet werden, ebenfalls von der vorliegenden Erfindung umfasst werden.

Gemäß weiterer bevorzugter Ausführungsformen der Erfindung kann das Sicherheitselement 14 als eine Kombination aus Hard- und Softwarekomponenten in einem vertrauenswürdigen Teil eines Betriebssystems einer zentralen Prozessoreinheit des mobilen Endgeräts 12 ausgebildet sein, die dem Fachmann auch als gesicherte Laufzeitumgebung ("Trusted Execution Environment"; TEE) bekannt ist. Das Sicherheitselement 14 kann dann beispielsweise innerhalb einer solchen gesicherten Laufzeitumgebung des mobilen Endgeräts 12 in Form von darin ablaufenden Programmen, sogenannten Trustlets® ausgebildet sein.

Das mobile Endgerät 12 ist dazu ausgestaltet, über die Luftschnittstelle mit einem Mobilfunknetzwerk (auch kurz als "Mobilfunknetz" oder als "Public Land Mobile Network" [PLMN] bezeichnet) eines Mobilfunksystems zu kommunizieren. Wie dies dem Fachmann bekannt ist, kann das mobile Endgerät 12 hierzu ein GSM-Modul (nicht in Figur 1 dargestellt) mit einer Antenne zum Empfangen und Senden von Radiowellen aufweisen.

In Figur 1 ist beispielhaft ein erstes Mobilfunknetz 20 dargestellt. Dabei ist es denkbar, dass das Mobilfunknetz 20 von einem ersten Mobilfunknetzbetreiber (auch als "Mobile Network Operator" oder MNO bezeichnet) und ein zweites Mobilfunknetz 40, das nicht in Figur 1 dargestellt ist, von einem zweiten Mobilfunknetzbetreiber betrieben wird. Gemäß bevorzugter Ausführungsformen der Erfindung werden das Mobilfunknetz 20 und/oder das Mobilfunknetz 40 gemäß dem GSM-Standard ("Global Standard for Mobile Communications") betrieben.

Nachstehend werden bevorzugte Ausführungsformen der Erfindung im Zusammenhang mit Mobilfunknetzwerken 20, 40 gemäß dem GSM-Standard beschrieben, der in einer Vielzahl von ETSI-Spezifikationen spezifiziert ist. Der Fachmann wird jedoch erkennen, dass die vorliegende Erfindung auch im Zusammenhang mit anderen Mobilfunknetzen vorteilhaft eingesetzt werden kann. Derartige Netze umfassen Mobilfunknetze der dritten Generation (3GPP), wie UMTS (Universal Mobile Telecommunications System), Mobilfunknetze der vierten Generation (4G), wie LTE (Long Term Evolution), sowie andere Mobilfunknetze, wie CDMA und dergleichen.

Wie dies dem Fachmann bekannt ist, umfasst ein gemäß dem GSM-Standard aufgebautes Mobilfunknetz bzw. PLMN im Allgemeinen ein BSS ("Base Station Subsystem"), das aus einer Vielzahl von BTS ("Base Transceiver Station") besteht, die jeweilige Funkzellen des PLMN definieren und mit einem BSC ("Base Station Controller") verbunden sind. Üblicherweise handelt es sich bei dem BSC um einen einer Vielzahl von BSC, die mit einem gemeinsamen MSC ("Mobile Switching Center") kommunizieren. Häufig ist eine lokale Datenbank, die VLR ("Visitor Location Register") genannt wird, Teil des MSC, um Informationen über die Mobilfunkteilnehmer vorzuhalten, die sich momentan in den Funkzellen befinden, die von einem MSC versorgt werden (d.h. der von einem MSC abgedeckte Bereich). Das MSC stellt im Wesentlichen dieselbe Funktionalität wie eine Vermittlungsstelle im Festnetz (public-switched telephone network; PSTN) bereit und steht in Kommunikation mit einem HLR ("Home Location Register"), bei dem es sich um die primäre Datenbank des PLMN handelt, in der Informationen zur Anmeldung bzw. Authentisierung der Mobilfunkteilnehmer gespeichert sind. Hierzu hat das HLR üblicherweise Zugriff auf ein AUC ("Authentication Center"). Wie dies dem Fachmann bekannt ist, können die Kommunikationsverbindungen zwischen den vorstehend beschriebenen Komponenten eines PLMNs auf proprietären und/oder offenen Standards basieren. Die verwendeten Protokolle können beispielsweise SS7- oder IPbasiert sein. Wie die Netzwerkkomponenten als separate oder zusammengefasste Einheiten ausgebildet sind und wie die Schnittstellen zwischen diesen Komponenten ausgebildet sind, ist Sache des MNO, so dass die vorstehende Beschreibung lediglich als beispielhaft zu verstehen ist.

Der Fachmann wird erkennen, dass, obgleich die vorstehend beschriebenen Funktionseinheiten eines herkömmlichen Mobilfunknetzes gemäß dem GSM-Standard in anderen oder zukünftigen Mobilfunkstandards andere Namen aufweisen können, die zugrundeliegenden Prinzipien im Wesentlichen gleich sind und diese daher von der Erfindung ebenfalls umfasst werden.

Wie sich Figur 1 entnehmen lässt, steht das Mobilfunknetz 20 und das nicht dargestellte Mobilfunknetz 40 zumindest zeitweise in Kommunikation mit einem Hintergrundsystem 50, vorzugsweise in Form eines geeignet ausgestalteten Servers, wie dies nachstehend im Detail beschrieben wird. Das Mobilfunknetz 20 und/oder das nicht dargestellte Mobilfunknetz 40 können neben weiteren dem Fachmann bekannte Funktionseinheiten beispielsweise jeweils ein SMS-C ("Short Message Service Center") zum Speichern, Weiterleiten, Konvertieren und Zustellen von SMS-Nachrichten aufweisen, mittels derer beispielsweise Daten vom Hintergrundsystem 50 an das Sicherheitselement 14 des mobilen Endgeräts 12 übertragen werden können.

Wie sich dies der vergrößerten Ansicht des Sicherheitselements 14 in Figur 1 entnehmen lässt, umfasst das Sicherheitselement 14 vorzugsweise eine zentrale Verarbeitungseinheit bzw. einen zentralen Prozessor ("central processing unit"; CPU) 15. Vorzugsweise ist der Prozessor 15 derart ausgestattet, dass Applikationen auf dem Prozessor 15 ausgeführt werden können, wie beispielsweise eine nicht in Figur 1 dargestellte Subskriptionsverwaltungsapplikation 16 ("subscription management applet"; SM Applet), die vorzugsweise zumindest einige der Features zum Verwalten von Subskriptionsprofilen auf dem Sicherheitselement 14 bereitstellt, wie dies nachstehend detailliert beschrieben wird. Vorzugsweise ist die Subskriptionsverwaltungsapplikation 16 in Form eines Java Applets implementiert. Zur Bereitstellung einer entsprechenden Ausführungsumgebung für das SM Applet 16 kann vorzugsweise ein sicheres Betriebssystem (nicht in Figur 1 gezeigt) auf dem Prozessor 15 implementiert sein.

Das Sicherheitselement 14 umfasst vorzugsweise ferner eine Speichereinheit 17, die vorzugsweise als eine nicht-flüchtige, wiederbeschreibbare Speichereinheit, z.B. in Form eines Flash-Speichers, implementiert ist. Die Speichereinheit 17 ist dazu ausgestaltet, eine Vielzahl von Subskriptionsprofilen aufzunehmen, beispielsweise die in Figur 1 dargestellten Subskriptionsprofile SP1 und SP2. Erfindungsgemäß können die in der Figur 1 dargestellten beispielhaften Subskriptionsprofile SP1 und SP2 unterschiedliche Betriebssysteme OS1 und OS2 für das Sicherheitselement 14 enthalten. Mit anderen Worten: erfindungsgemäß enthalten das erste Subskriptionsprofil SP1 und das zweite Subskriptionsprofil SP2 jeweils ein Betriebssystem OS1 und OS2 für das Sicherheitselement 14, wobei es bei den Betriebssystemen OS1 und OS2 der Subskriptionsprofile SP1 und SP2 um ein und dasselbe Betriebssystem oder um unterschiedliche Betriebssysteme für das Sicherheitselement 14 handeln kann. Ferner enthalten das Subskriptionsprofil SP1 und das Subskriptionsprofil SP2 Daten, die es dem Sicherheitselement 14 und dem mobilen Endgerät 12 ermöglichen, sich in das Mobilfunknetz 20 bzw. das nicht dargestellte Mobilfunknetz 40 einzubuchen und über dieses zu kommunizieren, d.h. Subskriptionsberechtigungsdaten ("Subscription Credentials"), wie beispielsweise eine IMSI und/oder einen Authentifizierungsschlüssel Kᵢ.

Erfindungsgemäß ist in der Speichereinheit 17 ferner ein Bootloader 18 hinterlegt, der bei jedem Neustart oder Reset des Sicherheitselements 14 aufgerufen und ausgeführt wird. Der Bootloader 18 ist dazu ausgestaltet, entweder das in dem Subskriptionsprofil SP1 enthaltene Betriebssystem OS1 oder das in dem Subskriptionsprofil SP2 enthaltene Betriebssystem OS2 für das Sicherheitselement 14 zu laden und zu starten. Sobald der Bootloader 18 diese Aufgabe erfüllt hat, wird das Sicherheitselement 14 mit dem entsprechenden Betriebssystem betrieben, also beispielsweise mit dem im Subskriptionsprofil SP1 enthaltenen Betriebssystem OS1 oder mit dem im Subskriptionsprofil SP2 enthaltenen Betriebssystem OS2.

Wie der Fachmann erkennt, kann in diesem Zustand von außen, beispielsweise vom Hintergrundsystem 50, nur mit dem aktiven Betriebssystem des Sicherheitselements 14 kommuniziert werden. Der Bootloader 18 und das inaktive Betriebssystem können in diesem Zustand von außen nicht angesprochen werden. Hier tritt somit das Teilproblem auf, wie der nach einem Neustart bzw. Reset des Sicherheitselements 14 automatisch startende und damit nicht "ansprechbare" Bootloader 18 des Sicherheitselements 14 dazu veranlasst werden kann, beim nächsten Neustart des Sicherheitselements 14 statt des aktiven Betriebssystems OS1, beispielsweise des Subskriptionsprofils SP1, ein inaktives Betriebssystem OS2 eines gewünschten Subskriptionsprofil, beispielsweise des Subskriptionsprofils SP2, zu laden.

Gemäß bevorzugter Ausführungsformen der Erfindung ist zur Lösung dieses Problems vorgesehen, dass das aktive Betriebssystem des Sicherheitselements 14 vom Hintergrundsystem 50 eine Nachricht empfangen kann, beispielsweise eine SMS-Nachricht, dass das Sicherheitselement 14 vom aktiven Subskriptionsprofil und damit vom aktiven Betriebssystem zu einem inaktiven Subskriptionsprofil und zu einem inaktiven Betriebssystem wechseln soll. Das mit dem aktiven Betriebssystem betriebene Sicherheitselement ist dazu ausgestaltet, diese Nachricht an den Bootloader 18 weiterzuleiten.

Erfindungsgemäß ist der Bootloader 18 dazu ausgestaltet, die weitergeleitete Nachricht zu analysieren und die Information aus dieser zu extrahieren, dass ein Wechsel zu einem bestimmten inaktiven Subskriptionsprofil und somit zu einem bestimmten inaktiven Betriebssystem erfolgen soll. Dabei erfolgt die Kommunikation zwischen dem aktiven Betriebssystem und dem Bootloader 18 vorzugsweise über eine geeignet ausgestaltete Programmbibliothek oder Programmierschnittstelle bzw. API ("application programming interface"). Eine solche Programmbibliothek oder API kann beispielsweise eine Funktion "Subskriptionsprofilwechsel (SP2)" bereitstellen, wobei der an diese Funktion zu übergebende Parameter das Subskriptionsprofil und somit Betriebssystem angibt, zu dem gewechselt werden soll. Es ist denkbar, dass beim Aufruf einer solchen Funktion der API im Bootloader 18 ein Marker gesetzt wird, der definiert, welches Subskriptionsprofil und damit welches Betriebssystem bei der nächsten Durchführung des Bootloaders 18, d.h. beim nächsten Neustart des Sicherheitselements 14, geladen wird.

Gemäß einer Alternative erfolgt die Extraktion der Information aus der Nachricht vom Hintergrundsystem 50 durch das aktive Betriebssystem selbst, das dann lediglich die extrahierte Information an den Bootloader 18 weiterleitet, dass ein Wechsel zu einem bestimmten inaktiven Subskriptionsprofil und somit zu einem bestimmten inaktiven Betriebssystem erfolgen soll.

Gemäß bevorzugter Ausführungsformen der Erfindung kann das Umschalten vom ersten Subskriptionsprofil zum zweiten Subskriptionsprofil durch das mobile Endgerät 12, insbesondere durch eine Eingabe des Nutzers des mobilen Endgeräts 12, angestoßen werden.

## Patentansprüche

1. Verfahren zum Betreiben eines Sicherheitselements (14) eines mobilen Endgeräts (12) mit einer Speichereinheit (17), in der ein erstes Subskriptionsprofil (SP1) mit einem ersten Betriebssystem (OS1) für das Sicherheitselement (14) sowie ein zweites Subskriptionsprofil (SP2) mit einem zweiten Betriebssystem (OS2) für das Sicherheitselement (14) und ein Bootloader (18) vorliegen, wobei das Verfahren die folgenden Schritte umfasst:
Betreiben des Sicherheitselements (14) mit dem ersten Betriebssystem (OS1), um mit dem ersten Subskriptionsprofil (SP1) über ein erstes Mobilfunknetzwerk (20) kommunizieren zu können;
Umschalten vom ersten Betriebssystem (OS1) zum zweiten Betriebssystem (OS2) des Sicherheitselements (14), indem nach einem Neustart des Sicherheitselements (14) von dem Bootloader (18) in der Speichereinheit (17) das zweite Betriebssystem (OS2) geladen und ausgeführt wird; und
Betreiben des Sicherheitselements (14) mit dem zweiten Betriebssystem (OS2), um mit dem zweiten Subskriptionsprofil (SP2) über ein zweites Mobilfunknetzwerk (40) kommunizieren zu können,
wobei der Schritt des Umschaltens vom ersten Betriebssystem zum zweiten Betriebssystem des Sicherheitselements weiterhin die folgenden Schritte umfasst:
Empfangen einer Nachricht von einem Hintergrundsystem (50) durch das mit dem ersten Betriebssystem betriebene Sicherheitselement (14) mit dem Informationsgehalt, dass vom ersten Betriebssystem (OS1) zum zweiten Betriebssystem (OS2) des Sicherheitselements (14) umgeschaltet werden soll;
Weiterleiten der Nachricht an den Bootloader (18); und
Extrahieren des Informationsgehalts der Nachricht aus der Nachricht durch den Bootloader (18), so dass die Einstellungen des Bootloaders (18) derart geändert werden, dass nach einem Neustart des Sicherheitselements (14) das zweite Betriebssystem (OS2) des Sicherheitselements (14) geladen und ausgeführt wird; und/oder
Empfangen einer Eingabe von einem Nutzer durch das mit dem ersten Betriebssystem (OS2) betriebene Sicherheitselement (14) mit dem Informationsgehalt, dass vom ersten Betriebssystem (OS1) zum zweiten Betriebssystem (OS2) des Sicherheitselements (14) umgeschaltet werden soll;
Weiterleiten der Eingabe an den Bootloader (18); und
Extrahieren des Informationsgehalts der Eingabe aus der Eingabe durch den Bootloader (18), so dass die Einstellungen des Bootloaders (18) derart geändert werden, dass nach einem Neustart des Sicherheitselements (14) das zweite Betriebssystem (OS2) des Sicherheitselements (14) geladen und ausgeführt wird; und/oder
Empfangen einer Nachricht von einem Hintergrundsystem (50) durch das mit dem ersten Betriebssystem (OS1) betriebene Sicherheitselement (14) mit dem Informationsgehalt, dass vom ersten Betriebssystem (OS1) zum zweiten Betriebssystem (OS2) des Sicherheitselements (14) umgeschaltet werden soll;
Extrahieren des Informationsgehalts der Nachricht aus der Nachricht durch das mit dem ersten Betriebssystem (OS1) betriebene Sicherheitselement (14); und
Weiterleiten des Informationsgehalts der Nachricht an den Bootloader (18), so dass die Einstellungen des Bootloaders (18) derart geändert werden, dass nach einem Neustart des Sicherheitselements (14) das zweite Betriebssystem (OS2) des Sicherheitselements (14) geladen und ausgeführt wird, wobei
die Einstellungen des Bootloaders (18) geändert werden, indem im Bootloader (18) ein Marker gesetzt wird, der definiert, dass nach einem Neustart des Sicherheitselements (14) das zweite Betriebssystem (OS2) des Sicherheitselements (14) geladen und ausgeführt wird.

2. Verfahren nach Anspruch 1, wobei die Kommunikation zwischen dem mit dem ersten Betriebssystem (OS1) betriebenen Sicherheitselement (14) und dem Bootloader (18) über eine geeignet ausgestaltete Programmbibliothek oder Programmierschnittstelle bzw. API ("application programming interface") erfolgt.

3. Sicherheitselement (14) für ein mobiles Endgerät (12) mit einer Speichereinheit (17), in der ein erstes Subskriptionsprofil (SP1) mit einem ersten Betriebssystem (OS1) für das Sicherheitselement (14) sowie ein zweites Subskriptionsprofil (SP2) mit einem zweiten Betriebssystem (OS2) für das Sicherheitselement (14) und ein Bootloader (18) vorliegen, wobei das Sicherheitselement (14) dazu ausgestaltet ist:
mit dem ersten Betriebssystem (OS1) betrieben zu werden, um mit dem ersten Subskriptionsprofil (SP1) über ein erstes Mobilfunknetzwerk (20) kommunizieren zu können;
vom ersten Betriebssystem (OS1) zum zweiten Betriebssystem (OS2) des Sicherheitselements (14) umzuschalten, indem nach einem Neustart des Sicherheit-selements (14) von dem Bootloader (18) in der Speichereinheit (17) das zweite Betriebssystem (OS2) geladen und ausgeführt wird; und
mit dem zweiten Betriebssystem (OS2) betrieben zu werden, um mit dem zweiten Subskriptionsprofil (SP2) über ein zweites Mobilfunknetzwerk (40) kommunizieren zu können,
wobei der Schritt des Umschaltens vom ersten Betriebssystem zum zweiten Betriebssystem des Sicherheitselements weiterhin die folgenden Schritte umfasst:
eine Nachricht von einem Hintergrundsystem (50) durch das erste Betriebssystem (OS1) mit dem Informationsgehalt zu empfangen, dass vom ersten Betriebssystem (OS1) zum zweiten Betriebssystem (OS2) des Sicherheitselements (14) umgeschaltet werden soll;
die Nachricht an den Bootloader (18) weiterzuleiten; und
den Informationsgehalt der Nachricht aus der Nachricht durch den Bootloader (18) zu extrahieren, so dass die Einstellungen des Bootloaders (18) derart geändert werden, dass nach einem Neustart des Sicherheitselements (14) das zweite Betriebssystem (OS2) des Sicherheitselements (14) geladen und ausgeführt wird; und/oder
eine Nachricht von einem Hintergrundsystem (50) durch das erste Betriebssystem (OS1) mit dem Informationsgehalt zu empfangen, dass vom ersten Betriebssystem (OS1) zum zweiten Betriebssystem (OS2) des Sicherheitselements (14) umgeschaltet werden soll;
den Informationsgehalt der Nachricht aus der Nachricht durch das erste Betriebssystem (OS1) zu extrahieren; und
den Informationsgehalt der Nachricht an den Bootloader (18) weiterzuleiten, so dass die Einstellungen des Bootloaders (18) derart geändert werden, dass nach einem Neustart des Sicherheitselements (14) das zweite Betriebssystem (OS2) des Sicherheitselements (14) geladen und ausgeführt wird, wobei
das Sicherheitselement (14) dazu ausgestaltet ist, die Einstellungen des Bootloaders (18) zu ändern, indem im Bootloader (18) ein Marker gesetzt wird, der definiert, dass nach einem Neustart des Sicherheitselements (14) das zweite Betriebssystem (OS2) des Sicherheitselements (14) geladen und ausgeführt wird.

4. Sicherheitselement (14) nach Anspruch 3, wobei das Sicherheitselement (14) derart ausgestaltet ist, dass die Kommunikation zwischen dem ersten Betriebssystem (OS1) und dem Bootloader 18 über eine geeignet ausgestaltete Programmbibliothek oder Programmierschnittstelle bzw. API ("application programming interface") erfolgt.

5. Mobiles Endgerät (12) mit einem Sicherheitselement (14) nach einem der Ansprüche 3 oder 4.

## Claims

1. A method for operating a security element (14) of a mobile terminal (12) with a memory unit (17) in which there are present a first subscription profile (SP1) with a first operating system (OS1) for the security element (14) and a second subscription profile (SP2) with a second operating system (OS2) for the security element (14) and a boot loader (15),
wherein the method comprises the following steps of:
operating the security element (14) with the first operating system (OS1), in order to be able to communicate with the first subscription profile (SP1) via a first mobile communication network (20);
switching from the first operating system (OS1) to the second operating system (OS2) of the security element (14) through the boot loader (18) in the memory unit (17) loading and executing the second operating system (OS2) following a reboot of the security element (14); and
operating the security element (14) with the second operating system (OS2), in order to be able to communicate with the second subscription profile (SP2) via a second mobile communication network (40);
wherein the step of switching from the first operating system to the second operating system of the security element further comprises the following steps of:
receiving a message from a background system (50) by the security element (14) operated with the first operating system, with the information content that a switch is to be effected from the first operating system (OS1) to the second operating system (OS2) of the security element (14);
forwarding the message to the boot loader (18); and
extracting the information content of the message from the message by the boot loader (18), so that the settings of the boot loader (18) are changed such that the second operating system (OS2) of the security element (14) is loaded and executed following a reboot of the security element (14); and/or
receiving an input from a user by the security element (14) operated with the first operating system (OS2), with the information content that a switch is to be effected from the first operating system (OS1) to the second operating system (OS2) of the security element (14);
forwarding the input to the boot loader (18); and
extracting the information content of the input from the input by the boot loader (18), so that the settings of the boot loader (18) are changed such that the second operating system (OS2) of the security element (14) is loaded and executed following a reboot of the security element (14); and/or
receiving a message from a background system (50) by the security element (14) operated with the first operating system (OS1), with the information content that a switch is to be effected from the first operating system (OS1) to the second operating system (OS2) of the security element (14);
extracting the information content of the message from the message by the security element (14) operated with the first operating system (OS1); and
forwarding the information content of the message to the boot loader (18), so that the settings of the boot loader (18) are changed such that the second operating system (OS2) of the security element (14) is loaded and executed following a reboot of the security element (14), wherein the settings of the boot loader (18) are changed by placing in the boot loader (18) a marker which defines that the second operating system (OS2) of the security element (14) is loaded and executed following a reboot of the security element (14).

2. The method according to claim 1, wherein the communication between the security element (14) operated with the first operating system (OS1) and the boot loader (18) is effected via a suitably configured program library or programming interface or API ("application programming interface").

3. A security element (14) for a mobile terminal (12) with a memory unit (17), in which there are present a first subscription profile (SP1) with a first operating system (OS1) for the security element (14) and a second subscription profile (SP2) with a second operating system (OS2) for the security element (14) and a boot loader (18), wherein the security element (14) is configured to:
be operated with the first operating system (OS1), in order to be able to communicate with the first subscription profile (SP1) via a first mobile communication network (20);
switch from the first operating system (OS1) to the second operating system (OS2) of the security element (14) through the boot loader (18) in the memory unit (17) loading and executing the second operating system (OS2) following a reboot of the security element (14); and
be operated with the second operating system (OS2), in order to be able to communicate with the second subscription profile (SP2) via a second mobile communication network (40),
wherein the step of switching from the first operating system to the second operating system of the security element further comprises the following steps of:
receiving a message from a background system (50) by the first operating system (OS1), with the information content that a switch is to be effected from the first operating system (OS1) to the second operating system (OS2) of the security element (14);
forwarding the message to the boot loader (18); and
extracting the information content of the message from the message by the boot loader (18), so that the settings of the boot loader (18) are changed such that the second operating system (OS2) of the security element (14) is loaded and executed following a reboot of the security element (14); and/or
receiving a message from a background system (50) by the first operating system (OS1), with the information content that a switch is to be effected from the first operating system (OS1) to the second operating system (OS2) of the security element (14);
extracting the information content of the message from the message by the first operating system (OS1); and
forwarding the information content of the message to the boot loader (18), so that the settings of the boot loader (18) are changed such that the second operating system (OS2) of the security element (14) is loaded and executed following a reboot of the security element (14), wherein
the security element (14) is configured to change the settings of the boot loader (18) by placing in the boot loader (18) a marker which defines that the second operating system (OS2) of the security element (14) is loaded and executed following a reboot of the security element (14).

4. The security element (14) according to claim 3, wherein the security element (14) is configured such that the communication between the first operating system (OS1) and the boot loader 18 is effected via a suitably configured program library or programming interface or API ("application programming interface").

5. A mobile terminal (12) with a security element (14) according to either of claims 3 or 4.

## Revendications

1. Procédé d'exploitation d'un élément de sécurité (14) d'un terminal mobile (12) ayant une unité de mémoire (17) dans laquelle se trouvent un profil d'abonnement (SP1) ayant un premier système d'exploitation (OS1) pour l'élément de sécurité (14) ainsi qu'un deuxième profil d'abonnement (SP2) ayant un deuxième système d'exploitation (OS2) pour l'élément de sécurité (14) et un chargeur d'amorçage (18),
cependant que le procédé comprend les étapes suivantes :
exploitation de l' élément de sécurité (14) avec le premier système d'exploitation (OS1) afin de pouvoir communiquer avec le premier profil d'abonnement (SP1) par l'intermédiaire d'un premier réseau radio mobile (20) ;
commutation du premier système d'exploitation (OS1) au deuxième système d'exploitation (OS2) de l'élément de sécurité (14), ce qui a lieu en ce que, après un redémarrage de l'élément de sécurité (14), par le chargeur d'amorçage (18) dans l'unité de mémoire (17), le deuxième système d'exploitation (OS2) est chargé et exécuté ; et
exploitation de l'élément de sécurité (14) avec le deuxième système d'exploitation (OS2) afin de pouvoir communiquer avec le deuxième profil d'abonnement (SP2) par l'intermédiaire d'un deuxième réseau radio mobile (40),
cependant que l'étape de la commutation du premier système d'exploitation au deuxième système d'exploitation de l'élément de sécurité comprend en outre les étapes suivantes :
réception, par l'élément de sécurité (14) exploité avec le premier système d'exploitation, d'un message provenant d'un système d'arrière-plan (50) et ayant pour contenu d'information qu'il faut qu'il y ait une commutation du premier système d'exploitation (OS1) au deuxième système d'exploitation (OS2) de l'élément de sécurité (14) ;
transmission du message au chargeur d'amorçage (18) ; et
extraction du contenu d'information du message à partir du message par le chargeur d'amorçage (18), de telle sorte que les configurations du chargeur d'amorçage (18) sont modifiées de telle façon que, après un redémarrage de l'élément de sécurité (14), le deuxième système d'exploitation (OS2) de l'élément de sécurité (14) est chargé et exécuté ; et/ou
réception, par l'élément de sécurité (14) exploité avec le premier système d'exploitation (OS2), d'une entrée d'un utilisateur ayant pour contenu d'information qu'il faut qu'il y ait une commutation du premier système d'exploitation (OS1) au deuxième système d'exploitation (OS2) de l'élément de sécurité (14) ;
transmission de l'entrée au chargeur d'amorçage (18) ; et
extraction du contenu d'information de l'entrée à partir de l'entrée par le chargeur d'amorçage (18), de telle sorte que les configurations du chargeur d'amorçage (18) sont modifiées de telle façon que, après un redémarrage de l'élément de sécurité (14), le deuxième système d'exploitation (OS2) de l'élément de sécurité (14) est chargé et exécuté ; et/ou
réception, par l'élément de sécurité (14) exploité avec le premier système d'exploitation (OS1), d'un message provenant d'un système d'arrière-plan (50) et ayant pour contenu d'information qu'il faut qu'il y ait une commutation du premier système d'exploitation (OS1) au deuxième système d'exploitation (OS2) de l'élément de sécurité (14) ;
extraction du contenu d'information du message à partir du message par l'élément de sécurité (14) exploité avec le premier système d'exploitation (OS1), et
transmission du contenu d'information du message au chargeur d'amorçage (18), de telle sorte que les configurations du chargeur d'amorçage (18) sont modifiées de telle façon que, après un redémarrage de l'élément de sécurité (14), le deuxième système d'exploitation (OS2) de l'élément de sécurité (14) est chargé et exécuté, cependant que
les configurations du chargeur d'amorçage (18) sont modifiées, ce qui a lieu en ce que, dans le chargeur d'amorçage (18), un marqueur est placé, lequel définit que, après un redémarrage de l'élément de sécurité (14), le deuxième système d'exploitation (OS2) de l'élément de sécurité (14) est chargé et exécuté.

2. Procédé selon la revendication 1, cependant que la communication entre l'élément de sécurité (14) exploité avec le premier système d'exploitation (OS1) et le chargeur d'amorçage (18) a lieu par l'intermédiaire d'une librairie ou interface de programmation ou API («application programming interface») conçue de manière appropriée.

3. Elément de sécurité (14) destiné à un terminal mobile (12) ayant une unité de mémoire (17) dans laquelle se trouvent un profil d'abonnement (SP1) ayant un premier système d'exploitation (OS1) pour l'élément de sécurité (14) ainsi qu'un deuxième profil d'abonnement (SP2) ayant un deuxième système d'exploitation (OS2) pour l'élément de sécurité (14) et un chargeur d'amorçage (18), cependant que l'élément de sécurité (14) est conçu pour :
être exploité avec le premier système d'exploitation (OS1) afin de pouvoir communiquer avec le premier profil d'abonnement (SP1) par l'intermédiaire d'un premier réseau radio mobile (20) ;
commuter du premier système d'exploitation (OS1) au deuxième système d'exploitation (OS2) de l'élément de sécurité (14), ce qui a lieu en ce que, après un redémarrage de l'élément de sécurité (14), par le chargeur d'amorçage (18) dans l'unité de mémoire (17), le deuxième système d'exploitation (OS2) est chargé et exécuté ; et
être exploité avec le deuxième système d'exploitation (OS2) afin de pouvoir communiquer avec le deuxième profil d'abonnement (SP2) par l'intermédiaire d'un deuxième réseau radio mobile (40),
cependant que l'étape de la commutation du premier système d'exploitation au deuxième système d'exploitation de l'élément de sécurité comprend en outre les étapes suivantes :
recevoir, par le premier système d'exploitation (OS1), un message provenant d'un système d'arrière-plan (50) et ayant pour contenu d'information qu'il faut qu'il y ait une commutation du premier système d'exploitation (OS1) au deuxième système d'exploitation (OS2) de l'élément de sécurité (14) ;
transmettre le message au chargeur d'amorçage (18) ; et
extraire le contenu d'information du message à partir du message par le chargeur d'amorçage (18), de telle sorte que les configurations du chargeur d'amorçage (18) sont modifiées de telle façon que, après un redémarrage de l'élément de sécurité (14), le deuxième système d'exploitation (OS2) de l'élément de sécurité (14) est chargé et exécuté, et/ou
recevoir, par le premier système d'exploitation (OS1), un message provenant d'un système d'arrière-plan (50) et ayant pour contenu d'information qu'il faut qu'il y ait une commutation du premier système d'exploitation (OS1) au deuxième système d'exploitation (OS2) de l'élément de sécurité (14) ;
extraire le contenu d'information du message à partir du message par le premier système d'exploitation (OS1) ; et
transmettre le contenu d'information du message au chargeur d'amorçage (18), de telle sorte que les configurations du chargeur d'amorçage (18) sont modifiées de telle façon que, après un redémarrage de l'élément de sécurité (14), le deuxième système d'exploitation (OS2) de l'élément de sécurité (14) est chargé et exécuté, cependant que
l'élément de sécurité (14) est conçu pour modifier les configurations du chargeur d'amorçage (18), ce qui a lieu en ce que, dans le chargeur d'amorçage (18), un marqueur est placé, lequel définit que, après un redémarrage de l'élément de sécurité (14), le deuxième système d'exploitation (OS2) de l'élément de sécurité (14) est chargé et exécuté.

4. Elément de sécurité (14) selon la revendication 3, cependant que l'élément de sécurité (14) est conçu de telle sorte que la communication entre le premier système d'exploitation (OS1) et le chargeur d'amorçage (18) a lieu par l'intermédiaire d'une librairie ou interface de programmation ou API («application programming interface») conçue de manière appropriée.

5. Terminal mobile (12) ayant un élément de sécurité (14) selon une des revendications 3 ou 4.
